# EUROPÄISCHE PATENTSCHRIFT

(11) **EP 2 218 611 B1**
(45) Veröffentlichungstag und Bekanntmachung des Hinweises auf die Patenterteilung: **19.01.2011**
(21) Anmeldenummer: 10090006.7
(22) Anmeldetag: 11.02.2010
(51) Int. Cl.: B60R 11/02, H04M 1/04, H04M 1/60

(54) **Halterung für ein mobiles elektronisches Gerät zur temporären Fixierung des Gerätes an der Halterung**
Holder for a mobile electronic device for temporarily fixing the device to the holder
Fixation pour un appareil électronique mobile destiné à la fixation temporaire de l'appareil sur la fixation

(30) Priorität: 13.02.2009 DE 102009009447
(43) Veröffentlichungstag der Anmeldung: 18.08.2010
(73) Patentinhaber: Funkwerk Dabendorf GmbH, 15806 Dabendorf (DE)
(72) Erfinder: Griesche, Alexander, 12557 Berlin (DE); August, Thomas, 10717 Berlin (DE)
(74) Vertreter: Patentanwälte Bressel und Partner

(56) Entgegenhaltungen:
- EP-A1- 1 732 291
- WO-A1-03/019803
- DE-A1-102007 013 187
- DE-U1- 9 102 981
- DE-U1-202005 002 935

## Beschreibung

Die Erfindung betrifft eine Halterung für ein mobiles elektronisches Gerät, durch welche ein elektronisches Gerät temporär fixiert werden kann, insbesondere in einem Kraftfahrzeug. Durch einen elektrischen Anschluss des Geräts, während es von der Halterung gehalten wird, kann das Gerät insbesondere mit peripheren elektronischen Einheiten (wie z. B. einer Freisprecheinrichtung des Kraftfahrzeugs) verbunden sein. Die Erfindung bezieht sich vorzugsweise auf eine Halterung für Kleingeräte, wie beispielsweise Mobiltelefone, Smartphones oder PDAs (Personal Digital Assistants).

Aus unterschiedlichen Gründen und zu unterschiedlichen Zwecken ist es erforderlich, mobile elektronische Geräte der vorgenannten Art vorübergehend in einem Halter festzulegen. So werden die Geräte beispielsweise zur elektrischen Fremdversorgung oder zum Aufladen ihrer Akkumulatoren in entsprechende Halter eingefügt. Insbesondere in einem Kraftfahrzeug ist es bekannt, ein Mobilfunkgerät mittels einer entsprechenden Halterung zu fixieren, d.h. seine Position und Lage relativ zu Einrichtungen des Kraftfahrzeugs festzulegen.

Üblicherweise befinden sich Mobiltelefone in Kraftfahrzeugen in einer annähernd vertikalen Ausrichtung, wenn sie von einer Halterung fixiert werden. Dabei kann die Halterung eine Aufnahme aufweisen, deren Form mit einem Köcher vergleichbar ist. Es ist auch möglich, dass das Mobiltelefon durch eine entsprechend ausgebildete Halteschale in einer horizontalen Lage gehalten wird. Im letztgenannten Fall wird die das Handy aufnehmende Halteschale häufig selbst nochmals in einer dafür im Fahrzeuginnenraum, beispielsweise im Bereich der Mittelkonsole, ausgebildeten Mulde verrastet.

Bekannt ist auch eine feste Montage der Halterungen im Fahrzeug. Die Halterungen müssen eine sichere Lagefixierung der mobilen Geräte im Fahrzeug und deren kontaktsichere Verbindung mit peripheren Geräten gewährleisten. Dabei soll der Nutzer das Gerät auf einfache Weise in die Halterung einsetzen und wieder herausnehmen können.

Bei einigen bekannten Halterungen greifen Rastnasen oder Klemmelemente in entsprechende am Gehäuse der Geräte vorgesehene Ausnehmungen ein. Auch ist es bekannt, Halterungen zur vorwiegend horizontalen Lagefixierung von Mobilfunkgeräten so auszubilden, dass diese ein Grundelement aufweisen, an welcher ein Träger angelenkt ist, der das von der Halterung aufgenommene Gerät abschnittsweise umfasst und zum Einfügen des Gerätes in die Halterung oder zu dessen Entnahme gegen das Grundelement verschwenkbar ist. Eine entsprechende Lösung wird beispielsweise durch die DE 196 52 826 A1 offenbart.

Um Kosten bei der Gestaltung der Halterungen zu sparen und da mobile Geräte aus Designgründen teilweise auch ohne Ausnehmungen zum Eingreifen komplementärer Rast- oder Klemmelemente eines Halters ausgebildet werden, sind alternative Möglichkeiten zur Festlegung und sicheren elektrischen Kontaktierung der Geräte gefragt.

DE 10 2005 011605 A1 beschreibt eine Halterung, die eine Auflagefläche für ein mobiles elektronisches Gerät aufweist. Zumindest Teile dieser Auflagefläche und eines darauf liegenden mobilen Gerätes sind von einer Einfassung zur temporären Festlegung des Gerätes an der Auflagefläche umgeben. Die Haltung weist ferner mindestens ein elektrisches Kontaktmittel auf. Das Kontaktmittel, welches der Verbindung eines, mit einem komplementären Kontaktmittel ausgestatteten mobilen Gerätes mit peripheren elektronischen Einheiten dient, ist beweglich an der Halterung angeordnet. Das Kontaktmittel ist über mindestens eine Druck- oder Zugfeder an der Halterung gelagert und zwar so, dass es in einer rein translatorischen Bewegung parallel zur oder in der Ebene der Auflagefläche der Halterung verschiebbar ist. Die Gestaltung der Halterung ist dabei derart, dass das Kontaktmittel zum Einfügen eines mobilen Gerätes zunächst gegen die Kraft der zur Lagerung des Kontaktmittels vorgesehenen Feder oder Federn bewegt wird. Dies geschieht, indem ein Benutzer der Vorrichtung über ein auf das Kontaktmittel aufgesetztes, in die Vorrichtung einzufügendes Gerät eine Kraft auf das Kontaktmittel ausübt. Hierbei bringt er gleichzeitig das festzulegende mobile Gerät und dessen komplementäres Kontaktmittel mit dem Kontaktmittel der Halterung in Kontakt, wobei die Kontaktmittel in Eingriff gelangen. Wenn der Benutzer das Gerät nicht mehr gegen das Kontaktmittel der Halterung drückt, wird das mobile Gerät durch die Feder gegen die Einfassung der Halterung gedrückt und/oder unter einen von dieser Einfassung ausgebildeten Rand geschoben. Durch die über das Kontaktmittel der Halterung weiterhin ausgeübte Federkraft wird das Gerät in dieser Lage fixiert.

Durch die in der DE 10 2005 011 605 A1 beschriebene Halterung wird das Gerät sicher fixiert und elektrisch kontaktiert, wobei keinerlei Vertiefungen oder Aussparungen an der Außenoberfläche des Geräts erforderlich sind, in die Rastnasen oder andere Vorsprünge der Halterung eingreifen müssen. Auch müssen keine einander gegenüberliegenden, beweglich miteinander gekoppelten Teile der Halterung, etwa Klemmbacken, vorgesehen sein. Die translatorische Beweglichkeit eines mechanischen Adapters, der an die Form des zu haltenden Geräts angepasst ist und der das Kontaktmittel aufweist oder mit ihm verbunden ist, reicht aus, um das Gerät auf einfache Weise einsetzen zu können und sicher in der Halterung zu halten.

Durch die translatorische Bewegung und die Federkraft wird das Gerät gegen die Einfassung der Halterung gedrückt oder unter einen von der Einfassung ausgebildeten Rand geschoben. Dabei legt das Gerät in Richtung der translatorischen Bewegung einen bestimmten Weg zurück, über den ein Entfernen des Geräts aus der Halterung nicht mehr oder nur noch mit Gewalt möglich ist, da das Gerät bereits teilweise in Eingriff mit der Einfassung gelangt ist oder bereits unter den Rand der Einfassung geschoben worden ist. Dieser Weg kann daher beim Einsetzen des Geräts in die Halterung nicht dazu genutzt werden, das Gerät durch eine translatorische Bewegung in die umgekehrte Richtung elektrisch an die Kontaktmittel der Halterung anzuschließen. Häufig sind die komplementären Kontaktmittel mobiler elektronischer Geräte so ausgestaltet, dass die Kontaktmittel der Halterung in eine Ausnehmung des Geräts eingeführt werden müssen, um den elektrischen Kontakt herzustellen. Das Kontaktmittel der Halterung muss daher insgesamt über eine so große Wegstrecke bewegbar sein, dass sowohl der elektrische Kontakt zwischen dem Kontaktmittel und dem komplementären Kontaktmittel des Geräts hergestellt werden kann als auch bei hergestelltem elektrischen Kontakt das Gerät in die Halteposition gebracht werden kann.

Eine solche Gestaltung ist jeweils für einen bestimmten Typ eines mobilen elektronischen Geräts möglich. Auf dem Markt sind jedoch viele verschiedene Typen mit unterschiedlichen Außenabmessungen und unterschiedlichen komplementären Kontaktmitteln. Die Herstellungskosten für entsprechende Halterungen sind hoch. Für die Anfertigung entsprechender Herstellungswerkzeuge, z.B. Spritzgussformen, sind Kosten aufzubringen, die sich erst nach Verkauf größerer Stückzahlen der Halterung amortisieren. Zur Kostenreduktion ist es daher wünschenswert, zumindest Teile der Halterungen für eine Vielzahl unterschiedlicher Gerätetypen in gleicher Weise herzustellen. Aufgrund der unterschiedlichen Längen und Breiten der Geräte muss die translatorische Bewegung des Kontaktmittels gemäß DE 10 2005 011 605 A1 aber über einen sehr großen Wegbereich möglich sein, um bei allen von der Halterung aufzunehmenden Geräten eine sichere elektrische Kontaktierung und zuverlässige mechanische Fixierung zu ermöglichen.

DE 10 2007 013 187 A1 beschreibt eine Halterung für ein elektronisches Gerät mit einem Grundelement und einem relativ zu diesem beweglich befestigten Adapter für das Gerät. Der Adapter besitzt Anschlusskontakte für das Gerät. Die gesamte Fixierung besteht aus den Anschluss-/Gegenkontakten an einem Ende des Geräts und einem Formelement am anderen Ende. Der Adapter ist nach Einlegen des Geräts und vor einer Längsverschiebung zum Grundelement hin verschwenkbar.

DE 40 15 091 A1 beschreibt ein Mobilfunktelefon mit einer Halterung. Ein erstes Haltemittel ist als in der Halterung schwenkbar und längsverschieblich gelagerter Aufnahmekörper ausgebildet. Ein Federmittel drückt den Aufnahmekörper mit eingesetztem Handfunktelefon gegen ein zweites Haltemittel. Der Aufnahmekörper ist in einer Schwenkachse drehbar gelagert.

DE 20 2005 002 935 U1 beschreibt eine Haltevorrichtung zur Haltung eines mobilen elektronischen Endgeräts. Endgeräte-spezifische Kopfadapter der Halterung sind austauschbar mit einem Grundteil der Halterung verbindbar.

WO 03/019803 A1 beschreibt eine Halterung für ein elektronisches Gerät, insbesondere ein Mobiltelefon, mit einem schwenkbar an einem Grundelement angelenkten Träger für das Mobiltelefon. Hierbei ist zwischen dem Träger und dem Mobiltelefon ein Adapter angeordnet, der für die elektrische bzw. elektronische und/oder mechanische Anpassung des Mobiltelefons an den Träger ausgebildet ist.

DE 91 02 981.3 U1 offenbart eine Funkgeräteanordnung mit einem Handgerät und einer Halterung, in welche das Handgerät einsetzbar ist, mit Mitteln zur mechanischen Festlegung des Handgeräts in der Halterung und zur Herstellung elektrischer Verbindungen zwischen der Halterung und dem Handgerät. Die Halterung weist eine Aufnahme auf, in die in einer ersten stabilen Grundstellung das Handgerät eingesetzt bzw. entnommen werden kann und die gegen eine Rückstellkraft in eine Betriebsstellung gebracht werden kann, wobei Verriegelungsmittel zur Festlegung eines in die Aufnahme eingesetzten Handgeräts in der Betriebsstellung der Aufnahme vorhanden sind.

Es ist daher eine Aufgabe der vorliegenden Erfindung, eine Halterung für das Fixieren und elektrische Kontaktieren eines mobilen elektronischen Gerätes anzugeben, die mit Ausnahme der elektrischen Kontaktierungselemente ohne Eingriffselemente zum Eingreifen in Ausnehmungen des Geräts auskommen kann und dennoch eine einfache Handhabung beim Einsetzen des Geräts in die Halterung und beim Herausnehmen ermöglicht. Dabei müssen auch die üblichen Vorschriften erfüllbar sein, wonach das Gerät z.B. beim Betrieb eines Kraftfahrzeugs hohen Beschleunigungen ausgesetzt werden kann, ohne dabei unbeabsichtigt aus der Halterung austreten zu können.

Gemäß einem Grundgedanken der vorliegenden Erfindung wird dem Kontaktelement der Halterung, mit dem ein elektrischer Kontakt zu einem komplementären Kontaktelement des Geräts hergestellt werden soll, nicht nur eine translatorische Bewegung relativ zu einer Basis der Halterung ermöglicht, sondern auch eine Drehbewegung um eine Drehachse. Die Drehachse verläuft vorzugsweise in einer Richtung, die senkrecht zu der Bewegungsrichtung der translatorischen Bewegung oder einer parallel zu dieser Bewegungsrichtung verlaufenden Linie verläuft.

Unter einer translatorischen Bewegung wird eine geradlinige Bewegung verstanden. Da aber sowohl eine Drehbewegung als auch eine translatorische Bewegung für das Kontaktelement der Halterung möglich ist, muss das Kontaktelement relativ zu der Basis der Halterung nicht zwangsläufig bei der translatorischen Bewegung eine konstante, gleich bleibende Drehstellung einnehmen. Vielmehr kann zumindest während eines Teils der translatorischen Bewegung, die zum Einsetzen des Geräts in die Halterung ausgeführt wird, auch eine Drehbewegung um die Drehachse stattfinden.

Das elektrische Kontaktelement der Halterung kann mehrstückig ausgeführt sein oder es können sogar völlig separate Bauteile vorgesehen sein, mit denen insgesamt die gewünschte elektrische Kontaktierung zwischen Halterung und Gerät hergestellt wird. Drehbeweglich und außerdem translatorisch beweglich ist daher je nach Art der Halterung zumindest ein elektrisches Kontaktelement. Die Art der Halterung hängt von dem Typ des Geräts ab, das von der Halterung gehalten werden soll. Sind mehrere Kontaktelemente oder mehrere Stücke desselben Kontaktelements vorhanden, werden diese jedoch vorzugsweise gemeinsam gedreht und translatorisch bewegt.

Unter der Basis der Halterung wird ein Bereich verstanden, gegen den das mindestens eine elektrische Kontaktelement drehbeweglich und translatorisch beweglich ist. Dabei kann die Drehbeweglichkeit des elektrischen Kontaktelements relativ zu einem Teil der Halterung gegeben sein, welches wiederum linear, d.h. translatorisch, relativ zu der Basis beweglich ist. Dieser Fall wird bevorzugt. Dennoch ist das Kontaktelement, zumindest wenn momentan keine translatorische Bewegung stattfindet, auch unmittelbar relativ zu der Basis drehbeweglich. Die Basis kann insbesondere eine Unterschale (allgemeiner Grundelement genannt) aufweisen, das wiederum an Befestigungsmitteln befestigt werden kann, welche zuvor an einer Unterlage, z. B. einem Boden, einer Konsole, Armaturenbrett oder einer Wand befestigt wurde. Insbesondere können in die Unterschale elektrische und/oder elektronische Bauteile integriert sein, wie z.B. ein oder mehrere Platinen, die dem Zusammenwirken des von der Halterung gehaltenen Geräts mit peripheren Einheiten dienen. Da Mobiltelefone heutzutage in der Regel keinen Steckkontakt zur Ankopplung einer Antennenleitung aufweisen, wird in der Basis und vorzugsweise in der Unterschale ein Antennenkoppler angeordnet, der die Sende- und Empfangsantenne des Geräts drahtlos an periphere Hochfrequenzbauteile, wie z.B. Verstärker und Außenantenne eines Kraftfahrzeugs, ankoppelt. Der Antennenkoppler wird dazu vorzugsweise mit einer Hochfrequenzleitung verbunden. Auch kann in die Basis der Halterung ein Verstärker zum Verstärken der Antennensignale integriert sein. Die zuvor genannten Einbauteile können zumindest teilweise alternativ oder zusätzlich in andere Teile der Halterung, insbesondere in eine Oberschale (allgemeiner Zwischenelement genannt) integriert werden. Denkbar ist auch, dass elektrische und/oder elektronische Einbauteile oder Anbauteile mechanisch auch mit Teilen verbunden sind, die gemeinsam mit dem Kontaktelement relativ zur Basis gedreht und translatorisch bewegt werden. Das Zwischenelement, insbesondere die Oberschale der Halterung, dient bei der bevorzugten Ausführungsform dazu, zumindest einen mechanischen Adapter, der an die Außenabmessungen des zu haltenden Geräts angepasst ist, zu halten oder dessen Beweglichkeit gemeinsam mit dem Kontaktelement zu ermöglichen. Das Zwischenelement verbindet mechanisch diesen zumindest einen mechanischen Adapter mit anderen Teilen der Basis, insbesondere mit der Unterschale.

Unabhängig von der Gestaltung der Basis wird vorgeschlagen, dass die Halterung einen ersten mechanischen Adapter aufweist, der an die Außenabmessungen des zu haltenden Geräts angepasst ist. Dieser erste mechanische Adapter ist fest mit dem elektrischen Kontaktelement verbunden oder weist das elektrische Kontaktelement als integrales Teil auf. Der erste mechanische Adapter kann einstückig oder mehrstückig hergestellt werden. In einer bevorzugten Ausführungsform ist er mehrstückig hergestellt und bilden die mehreren Stücke gemeinsam eine Aussparung, in die das Kontaktelement eingesetzt ist und in seiner eingesetzten Position festgehalten ist.

Der erste mechanische Adapter kann z.B. eine Anlagefläche zum Anlegen eines ersten Oberflächenbereichs des zu haltenden Geräts aufweisen, wobei die Anlagefläche vorzugsweise so geformt ist, dass sie das Gerät an dem ersten Oberflächenbereich teilweise umfasst. Unter einem Umfassen wird verstanden, dass verschiedene Oberflächenpunkte der Anlagefläche durch eine gedachte gerade Linie verbunden werden können, die sich durch einen Bereich des zu haltenden Geräts hindurcherstreckt.

Außer dem ersten mechanischen Adapter kann die Halterung alternativ oder zusätzlich auch einen zweiten mechanischen Adapter aufweisen, der z.B. ebenfalls über das Zwischenelement mit dem Grundelement verbunden ist. Der zweite mechanische Adapter weist eine zweite Anlagefläche zum Anlegen eines zweiten Oberflächenbereichs des Geräts auf. Ist das Gerät in die Halterung eingesetzt, ist es insbesondere zwischen der ersten und der zweiten Anlagefläche der Halterung fixiert. Bei der bevorzugten Ausgestaltung liegen sich der erste und der zweite mechanische Adapter in der Bewegungsrichtung an gegenüberliegenden Seiten des gehaltenen Geräts gegenüber, in der das Kontaktelement translatorisch relativ zu der Basis der Halterung bewegbar ist. Dies ist jedoch nicht zwingend erforderlich. Ein zweiter mechanischer Adapter kann auch an anderer Stelle der Außenoberfläche des Geräts anliegen, wenn dies in der Halterung gehalten wird. Insbesondere können außer dem ersten mechanischen Adapter, der gemeinsam mit dem elektrischen Kontaktelement drehbeweglich und translatorisch beweglich ist, zumindest zwei weitere mechanische Adapter der Halterung vorgesehen sein, so dass das Gerät zumindest an drei Stellen von den Adaptern mechanisch kontaktiert wird.

Dadurch, dass das elektrische Kontaktelement des Halters gemeinsam mit dem ersten mechanischen Adapter sowohl drehbeweglich als auch translatorisch beweglich ist, wobei keine Relativbewegung des elektrischen Kontaktelements zu dem ersten mechanischen Adapter während des Einsetzens und des Herausnehmens des Geräts aus der Halterung erforderlich ist, kann das Gerät beim Einsetzen in die Halterung zunächst mit dem ersten Adapter und dem elektrischen Kontaktelement zumindest in mechanischen Kontakt gebracht werden. Hierzu befinden sich der erste Adapter und das Kontaktelement in einer ersten Drehposition, in der die genannte Kontaktierung ohne Behinderung durch andere Teile der Halterung, insbesondere ohne Behinderung durch den zweiten mechanischen Adapter, möglich ist. Je nach Typ des Geräts und dementsprechend je nach Bauart der Halterung ist der Drehwinkel, um den der erste mechanische Adapter und das Kontaktelement in der ersten Drehposition aus der Halteposition herausgedreht sind, unterschiedlich. Bei handelsüblichen Formaten von Mobiltelefonen (d.h. Verhältnis Breite zu Länge) beträgt dieser Drehwinkel z.B. 8° bis 10°.

Sobald der Kontakt zwischen dem Kontaktelement und dem komplementären Kontaktelement des Geräts zumindest teilweise hergestellt ist (d.h. sobald z.B. das Kontaktelement in eine Ausnehmung des Geräts, in dem sich das komplementäre Kontaktelement befindet, zumindest teilweise eingeführt ist), kann das Gerät gemeinsam mit dem ersten mechanischen Adapter und dem Kontaktelement um die Drehachse gedreht werden, um eine zweite Drehposition zu erreichen, in der der erste Adapter, das Kontaktelement und das Gerät durch eine translatorische Bewegung in die endgültige Halteposition gebracht werden können. Wie bereits erwähnt, kann die translatorische Bewegung bereits dann beginnen, wenn noch ein Teil der Drehbewegung auszuführen ist. Dies gilt in dem Umfang, in dem andere Teile der Halterung das Einsetzen des Geräts in die Halterung nicht mehr behindern.

Die Erfindung hat den Vorteil, dass keine schalenartige Aufnahme vorgesehen sein muss, die relativ zu der Basis der Halterung beweglich ist. Vielmehr reicht die lineare Beweglichkeit und Drehbeweglichkeit des ersten mechanischen Adapters aus, um das Einsetzen in die Haltung zu erleichtern.

Insbesondere wird Folgendes vorgeschlagen: Eine Halterung für ein mobiles elektronisches Gerät zur temporären Fixierung des Gerätes an der Halterung, insbesondere zur temporären Fixierung des Gerätes in einem Kraftfahrzeug, wobei
- die Halterung eine Basis und mindestens ein elektrisches Kontaktelement zur elektrischen Verbindung mit einem komplementären Kontaktelement an dem mobilen Gerät aufweist, insbesondere um das Gerät an eine Freisprecheinrichtung in dem Kraftfahrzeug anzuschließen,
- die Halterung einen ersten mechanischen Adapter aufweist, der eine erste Anlagefläche zum Anlegen eines ersten Oberflächenbereichs des Geräts aufweist und der das elektrische Kontaktelement als integralen Bestandteil aufweist oder fest mit dem Kontaktelement verbunden ist,
- die Halterung zumindest einen zweiten mechanischen Adapter aufweist, der eine zweite Anlagefläche zum Anlegen eines zweiten Oberflächenbereichs des Geräts aufweist, sodass das Gerät zwischen der ersten und der zweiten Anlagefläche von der Halterung fixierbar ist,
- der erste mechanische Adapter und das Kontaktelement gemeinsam durch eine translatorische Bewegung und außerdem durch eine Drehung um eine Drehachse relativ zu der Basis der Halterung beweglich sind,
- in einer ersten Drehposition des ersten mechanischen Adapters und des Kontaktelements das Kontaktelement mit dem komplementären Kontaktelement des Geräts in elektrischen Kontakt bringbar ist, sodass auch der erste Oberflächenbereich an der ersten Anlagefläche in Anlage gelangt,
- der erste mechanische Adapter und das Kontaktelement in einer zweiten Drehposition durch eine translatorische Bewegung bewegbar sind, sodass auch der zweite Oberflächenbereich an der zweiten Anlagefläche in Anlage gelangt.

Vorzugsweise weist die Halterung eine elastisch verformbare Einrichtung auf, die eine Spannkraft aufbringt, durch welche das Gerät gegen ein unbeabsichtigtes Entfernen gesichert wird, während es zwischen der ersten und der zweiten Anlagefläche der Halterung fixiert ist. Dabei sind der erste mechanische Adapter und das Kontaktelement in der zweiten Drehposition durch eine translatorische Bewegung gegen die Spannkraft bewegbar, um den zweiten Oberflächenbereich von der zweiten Anlagefläche zu entfernen.

Im Ergebnis wird das Gerät durch die Spannkraft, welche von der elastisch verformbaren Einrichtung aufgebracht wird, in der Halteposition gehalten, in der die Halterung das Gerät fixiert. Der Benutzer kann, insbesondere indem er das in der Halterung gehaltene Gerät translatorisch bewegt, eine der Spannkraft entgegen gerichtete Kraft aufbringen und das Gerät aus der Halteposition entfernen. Nachdem das Gerät weit genug von der zweiten Anlagefläche entfernt ist, kann durch eine Drehbewegung des mechanischen Adapters und des Kontaktelements eine Drehstellung des Geräts erreicht werden, in der das Gerät vollständig aus der Halterung entnehmbar ist, d.h. auch von der ersten Anlagefläche entfernt wird.

Diese Ausgestaltung der Erfindung hat daher den Vorteil, dass das Gerät in der Halteposition nicht verrastet werden muss. Es ist daher auch nicht erforderlich, einen Auslöser für das Entrasten des Geräts vorzusehen, um das Gerät aus der Halterung entnehmen zu können. Ein solcher Auslöser (z. B. eine Taste) hat den Nachteil, dass etwa gleichzeitig oder kurz nacheinander sowohl der Auslöser betätigt werden muss als auch das Gerät ergriffen werden muss. Dagegen kann der Benutzer bei der erfindungsgemäßen Halterung das Gerät ergreifen und gegen die Spannkraft bewegen und das Gerät kann daher nicht unbeabsichtigt herausfallen. Es reicht eine Hand des Benutzers für diesen Vorgang aus.

Die Spannkraft kann jedoch auch dazu genutzt werden, das Gerät in die Halteposition zu bringen. Die Handhabung des Geräts beim Einsetzen in die Halterung ist daher aufgrund der Spannkraft erleichtert. Insoweit hat die Spannkraft dieselbe Funktion, wie die in DE 10 2005 011 605 A1 beschriebene Federkraft. Insbesondere kann auch bei der vorliegenden Erfindung die Spannkraft durch eine oder mehrere Druckfedern (z.B. helixförmige Federn) erzeugt werden. Grundsätzlich ist es jedoch auch möglich, andere elastisch verformbare Einrichtungen einzusetzen, z.B. reversibel verformbaren Schaumstoff oder zumindest eine Blattfeder oder Spiralfeder mit entsprechender Übersetzungsmechanik.

Auch die Drehbewegung des ersten mechanischen Adapters und des Kontaktelements können gegen eine zweite Spannkraft einer zweiten elastisch verformbaren Einrichtung bzw. angetrieben durch diese zweite Spannkraft ausgeführt werden. Als zweite elastische Einrichtung eignet sich vorzugsweise eine Blattfeder oder ein Satz von Blattfedern. Die zweite Spannkraft wirkt vorzugsweise so, dass der erste mechanische Adapter und das Kontaktelement von der zweiten Spannkraft in die erste Drehposition gedrängt werden. Insbesondere ist ein Anschlag für die Drehbewegung vorgesehen, der ein Drehen über die erste Drehposition hinaus verhindert. Diese zweite Spannkraft hat den Vorteil, dass sich der erste mechanische Adapter und das Kontaktelement in der ersten Drehstellung befinden, wenn sich in der Halterung kein Gerät befindet. In der ersten Drehstellung ist die Halterung daher für das Gerät aufnahmebereit. Außerdem erleichtert die zweite Spannkraft dem Benutzer, das Gerät aus der Halterung zu entnehmen. Sobald die Drehbewegung aus der zweiten Drehposition in die erste Drehposition möglich ist, bewirkt die zweite Spannkraft eine solche Drehbewegung. Der Benutzer muss daher lediglich die translatorische Bewegung des Geräts ausführen oder auslösen.

Die Beweglichkeit des ersten Adapters und des Kontaktelements ist sowohl als Drehbeweglichkeit um die Drehachse als auch als translatorische Beweglichkeit so realisiert, dass der erste Adapter relativ zu einem translatorisch beweglichen Element drehbeweglich ist. Dadurch können der erste Adapter und das Kontaktelement in die erste und zweite Drehposition bewegt werden, d.h. hin- und herbewegt werden, wobei die Drehbewegung unmittelbar relativ zu dem translatorisch beweglichen Element ausgeführt wird. Das translatorisch bewegliche Element wiederum ist unmittelbar relativ zu der Basis der Halterung translatorisch bewegbar. Es kann z.B. als Gleiter, der an einer Gleitfläche der Basis entlang gleiten kann, oder als Element, dessen Bewegung auf andere Weise oder nur teilweise durch Gleitflächen geführt ist, ausgestaltet sein. Z.B. kann das Element an drehbar gelagerten Rollen der Basis abrollen.

Durch die Trennung der beiden unterschiedlichen Beweglichkeiten und Zuordnung der Beweglichkeiten zu einzelnen Bauteilen oder Bauteilgruppen (translatorisch bewegliches Element und erster mechanischer Adapter) können die Beweglichkeiten auf einfache Weise, kostengünstig und dauerhaft funktionsfähig realisiert werden.

Der zweite mechanische Adapter kann insbesondere als auswechselbares Einsatzteil zum Einsetzen in eine Aufnahme am Kopf oder Fuß der Halterung realisiert werden. Befindet sich das Einsatzteil am Kopf, d.h. oben an der Halterung, ist der erste mechanische Adapter am Fuß, d.h. unten an der Halterung, angeordnet und umgekehrt.

Nicht nur der zweite mechanische Adapter kann auswechselbar sein, sondern alternativ oder zusätzlich auch der erste mechanische Adapter. Dies ermöglicht es auf einfache Weise, die Halterung an andere Außenabmessungen von elektronischen Geräten und damit an unterschiedliche Gerätetypen anzupassen. Daher wird es bevorzugt, dass der erste mechanische Adapter und/oder der zweite mechanische Adapter gegen einen gleich wirkenden (d.h. das jeweils zu haltende Gerät haltenden und optional auch elektrisch kontaktierenden), jedoch mit einer anders geformten und/oder anders positionierten Anlagefläche versehenen Adapter austauschbar sind.

Erwähnt werden soll hier, dass dies auch bei Halterungen realisiert werden kann, deren erster mechanischer Adapter nicht drehbeweglich ist, sondern wie beispielsweise in der DE 10 2005 011 605 A1 beschrieben lediglich translatorisch beweglich ist. Die Kombination der Drehbeweglichkeit des ersten mechanischen Adapters mit der Möglichkeit, den ersten Adapter und/oder den zweiten Adapter auszuwechseln, führt aber dazu, dass die für alle Gerätetypen gleich gestalteten Teile der Halterung kleiner und einfacher konstruiert und hergestellt werden können, da die Drehbeweglichkeit wie oben erwähnt dazu führt, dass die translatorische Bewegung über eine kleinere Wegstrecke stattfinden kann, um das Gerät in die Halterung einzusetzen oder aus ihr herauszunehmen.

Zum Umfang der Erfindung gehört auch ein System mit einer Halterung, deren erster und/oder zweiter mechanischer Adapter gegen einen gleichwirkenden Adapter ausgetauscht werden kann, der für das Halten anderer Gerätetypen und anderer Außenabmessungen von Geräten ausgestaltet ist. Zur wahlweisen Fixierung von elektronischen Geräten mit unterschiedlichen Außenabmessungen weist das System für alle Geräte dieselbe Basis auf, insbesondere einschließlich etwaiger elektrischer und elektronischer Komponenten der Basis. Gleiche elektrische und elektronische Komponenten der Basis bedeutet aber nicht zwingend, dass auch die Funktion dieser elektrischen und elektronischen Komponenten exakt gleich sein muss. Vielmehr kann z.B. ein Datenprozessor der elektronischen Komponenten oder ein Datenspeicher speziell auf das jeweils zu haltende elektronische Gerät angepasst sein. Insbesondere kann in dem Datenspeicher speziell angepasste Firmware oder Software gespeichert sein, die auf dem Datenprozessor ausgeführt werden kann. Gleiche elektrische und elektronische Komponenten der Basis bedeutet aber, dass die sich in der Funktion entsprechenden Komponenten vorzugsweise an derselben Stelle in der Basis befinden. Insbesondere können Platinen oder kann eine einzelne Platine an derselben Stelle der Basis befestigt sein.

Das System weist für jedes Gerät mit unterschiedlichen Außenabmessungen jeweils einen zugeordneten Satz mechanischer Adapter auf, die als erster mechanischer Adapter und als zweiter mechanischer Adapter mit der Basis zu einer Halterung kombinierbar sind und die an die Außenabmessungen des Geräts angepasst sind. Unter der Anpassung an die Außenabmessungen des Geräts wird auch die entsprechend angepasste Gestaltung des Kontaktelements zur Herstellung des elektrischen Kontakts zu dem Gerät verstanden.

Ein weiterer Aspekt der Erfindung betrifft das Problem, dass das komplementäre elektrische Kontaktelement, welches in dem Gerät oder an dem Gerät angeordnet ist, an verschiedenen Stellen positioniert sein kann. Z.B. kann das Element oben an dem Gerät in der Nähe des Displays oder unten an dem Gerät in der Nähe einer Tastatur angeordnet sein. Um dasselbe Zwischenelement (z.B. Oberschale) und dasselbe Grundelement (z.B. Unterschale) der Halterung für solch unterschiedliche Gerätetypen verwenden zu können, wird vorgeschlagen, dass die Basis der Halterung so ausgestaltet ist, dass das Zwischenelement mit den daran angeordneten mechanischen Adaptern in zumindest zwei verschiedenen Ausrichtungen relativ zu dem Grundelement anordenbar ist. Insbesondere kann das Grundelement relativ zu dem Zwischenelement um 180° gedreht werden und auch in dieser gedrehten Ausrichtung mit dem Zwischenelement fest zu einer Basis verbunden werden. Daher kann das Grundelement immer in derselben Weise ausgestaltet sein und z.B. immer in derselben Weise mit einem Untergrund verbunden werden. Z. B. kann ein Befestigungselement fest an dem Untergrund montiert sein, das zur Befestigung der Halterung mit dem Grundelement in Eingriff gelangen kann. Durch die verschiedene Ausrichtung des Zwischenelements und der daran angeordneten mechanischen Adapter findet die Anpassung an die unterschiedlichen Gerätetypen statt. Selbstverständlich kann zur Anpassung an spezielle Außenabmessungen eines Geräts auch der erste oder der zweite mechanische Adapter ausgewechselt werden bzw. entsprechend ausgewählt werden.

Durch die Anpassung der Ausrichtung des Zwischenelements wird nicht nur in das Kontaktelement anders positioniert (z. B. oben an der Halterung), sondern auch der erste mechanische Adapter. Daher ist auch die lineare Beweglichkeit und die Drehbeweglichkeit an anderer Stelle der Halterung vorgesehen, nämlich dort, wo der mit dem Kontaktelemente verbundene erste mechanische Adapter angeordnet ist.

Ferner umfasst die Erfindung ein Verfahren zum Herstellen einer Halterung für ein mobiles elektronisches Gerät zur temporären Fixierung des Gerätes an der Halterung, insbesondere zur temporären Fixierung des Gerätes in einem Kraftfahrzeug, wobei
- an einer Basis derart ein erster mechanischer Adapter, der eine erste Anlagefläche zum Anlegen eines ersten Oberflächenbereichs des Gerätes aufweist, und ein Kontaktelement, das einer elektrischen Verbindung mit einem komplementären Kontaktelement an dem mobilen Gerät dient, angeordnet werden, dass der erste mechanische Adapter und das Kontaktelement gemeinsam durch eine translatorische Bewegung und außerdem durch eine Drehung um eine Drehachse relativ zu der Basis der Halterung beweglich sind,
- an der Basis zumindest ein zweiter mechanischer Adapter angeordnet wird, der eine zweite Anlagefläche zum Anlegen eines zweiten Oberflächenbereichs des Gerätes aufweist, sodass das Gerät zwischen der ersten und der zweiten Anlagefläche von der Halterung fixierbar ist,
sodass in einer ersten Drehposition des ersten mechanischen Adapters und des Kontaktelements das Kontaktelement mit dem komplementären Kontaktelement des Gerätes in elektrischen Kontakt bringbar ist, um den ersten Oberflächenbereich an der ersten Anlagefläche in Anlage zu bringen, und sodass der erste mechanische Adapter und das Kontaktelement in einer zweiten Drehposition durch eine translatorische Bewegung bewegbar sind, um auch den zweiten Oberflächenbereich an der zweiten Anlagefläche in Anlage bringen.

Ausführungsbeispiele der Erfindung werden nun unter Bezugnahme auf die beigefügte Zeichnung beschrieben. Die einzelnen Figuren der Zeichnung zeigen:
- Fig. 1: eine Explosionsdarstellung einer besonders bevorzugten Ausführungsform einer Halterung, wobei eine Unterschale und eine Oberschale der Halterung in einer ersten Weise zueinander ausgerichtet sind,
- Fig. 2: die Explosionsdarstellung von Fig. 1 aus einer anderen Perspektive,
- Fig. 3: eine Explosionsdarstellung der Halterung gemäß Fig. 1 und Fig. 2, wobei jedoch die Oberschale und die Unterschale relativ zueinander anders, um 180° gedreht ausgerichtet sind und wobei eine Kabelverbindung von einer Platine in der Unterschale zu einem Kontaktelement zum elektrischen Kontaktieren eines elektronischen Geräts in der Halterung anders ausgeführt ist als bei der in Fig. 1 und Fig. 2 dargestellten Anordnung,
- Fig. 4: eine Ansicht aus einer anderen Perspektive auf die Teile gemäß Fig. 3,
- Fig. 5: die aus den in Fig. 1 und Fig. 2 dargestellten Teilen zusammengesetzte Halterung in einem Zustand, in dem die Halterung bereit zur Aufnahme eines elektronischen Geräts ist,
- Fig. 6: die Halterung gemäß Fig. 5, wobei ein erster mechanischer Adapter mit Kontaktelementen relativ zu dem in Fig. 5 dargestellten Zustand translatorisch bewegt worden ist, indem ein zu haltendes elektronisches Gerät in Kontakt zu dem mechanischen Adapter gebracht worden ist, wobei die Fig. 6 das elektronische Gerät nicht zeigt, um den Blick auf die Teile der Halterung nicht zu behindern.
- Fig. 7: die Halterung gemäß Fig. 5 und Fig. 6, wobei der mechanische Adapter mit dem Kontaktelement relativ zu der in Fig. 6 dargestellten Stellung um eine Drehachse gedreht worden ist, um das in Fig. 6 und Fig. 7 nicht dargestellte Gerät anschließend in die Halteposition zu bringen,
- Fig. 8: die in Fig. 5 bis Fig. 7 dargestellte Halterung in der Halteposition des Geräts, wobei das Gerät nicht dargestellt ist, und
- Fig. 9: die Halterung gemäß Fig. 5 bis Fig. 8 in der Halteposition, wobei auch das Gerät dargestellt ist.

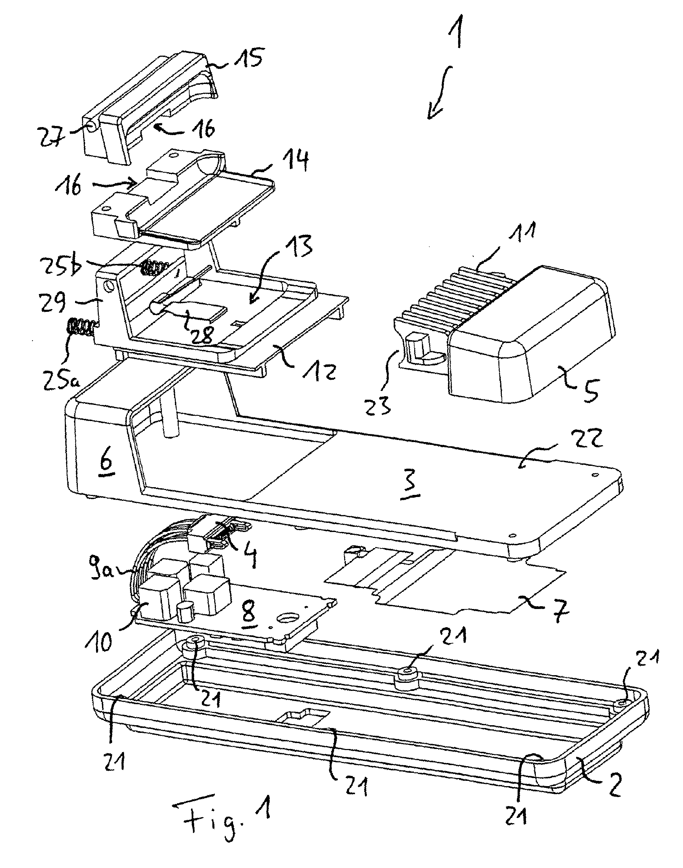

Die Explosionsdarstellung von Fig. 1 zeigt unten eine Unterschale 2, die wannenförmig ausgestaltet ist und in ihrem Boden eine Öffnung aufweist, durch die eine elektrische Kontaktierung zu einer in Fig. 1 nicht dargestellten Befestigungseinrichtung hergestellt werden kann.

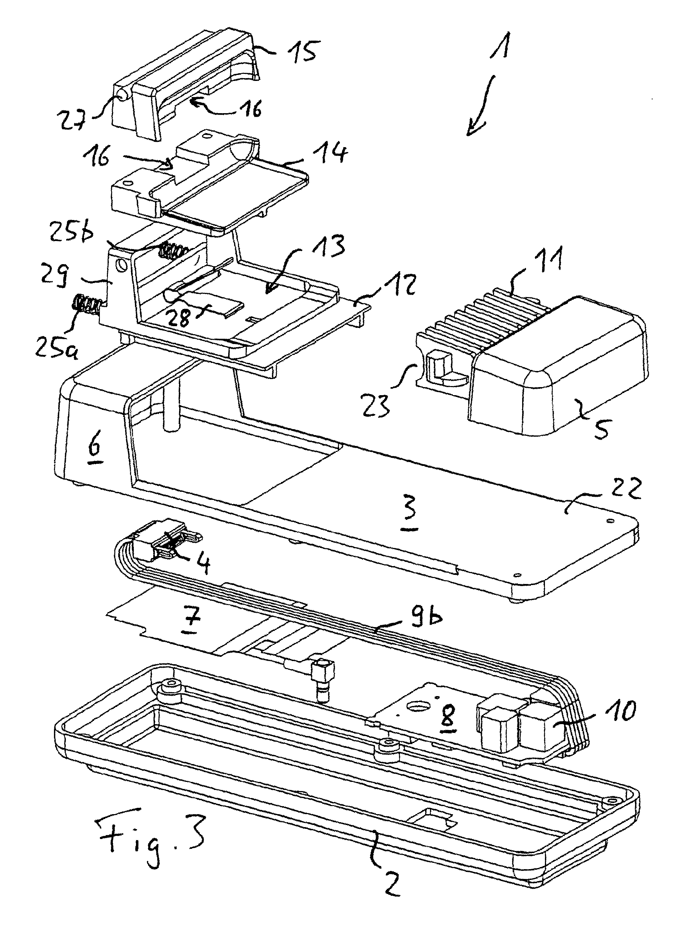

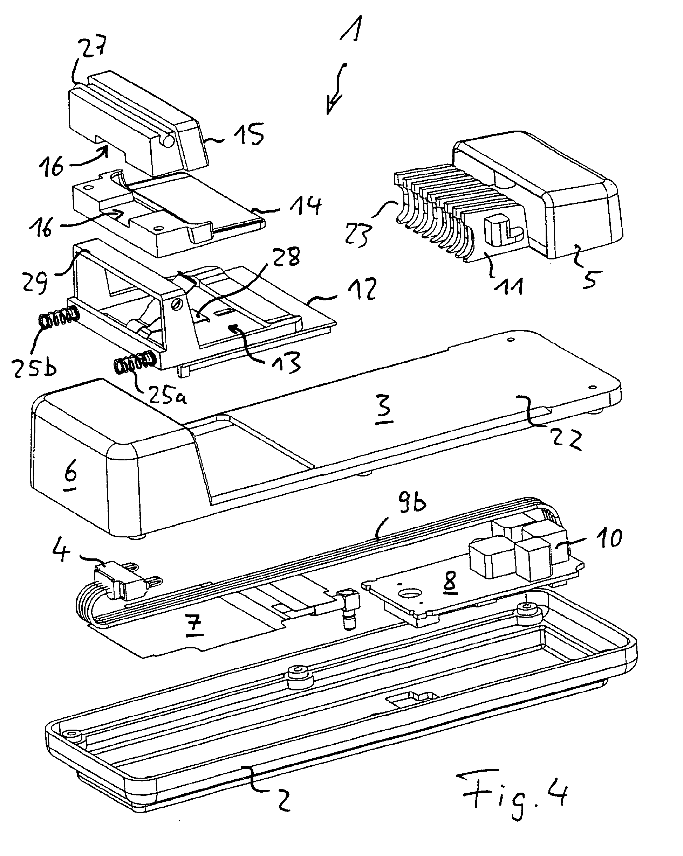

Eine Oberschale 3 kann an sechs Stellen 21 (z.B. über Schraubverbindungen) mit der Unterschale 2 verbunden werden. Dabei sind die Befestigungsstellen derart symmetrisch an der Oberschale 3 und der Unterschale 2 angeordnet, dass auch die in Fig. 3 und Fig. 4 um 180° gedrehte Anordnung der Oberschale 3 und Unterschale 2 gewählt werden kann.

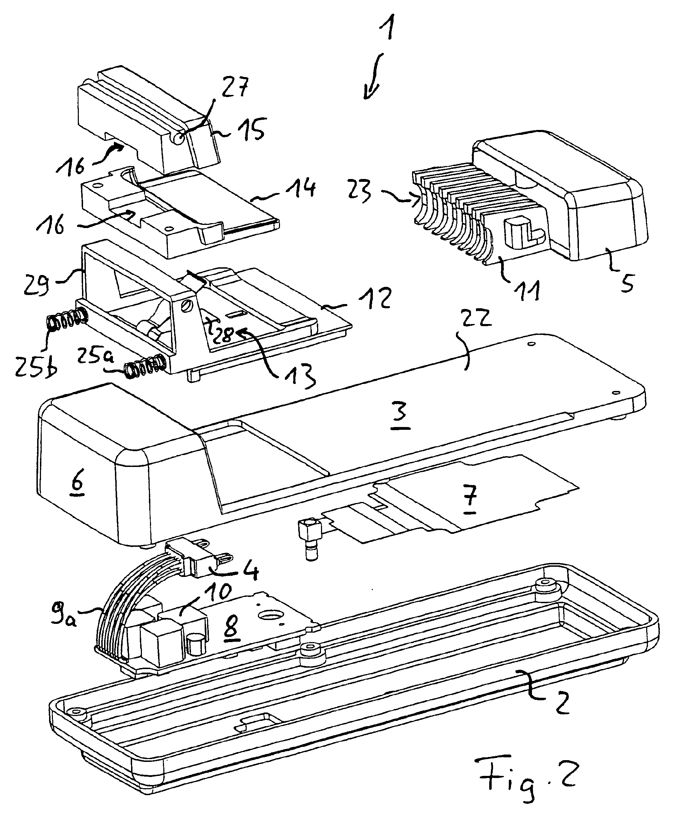

In dem durch die Oberschale 3 und Unterschale 2 gebildeten Gehäuseraum können diverse elektrische und elektronische Bauteile untergebracht werden. Beispielhaft sind in Fig. 1 bzw. Fig. 4 eine Platine 8 mit elektronischen Bauelementen 10 und ein Antennenkoppler 7 zum drahtlosen Ankoppeln der Halterung an die Sende- und Empfangsantenne des zu haltenden Geräts dargestellt. Von der Platine 8 geht im Fall der Fig. 1 und Fig. 2 eine kurze Kabelverbindung 9a zu einem Kontaktelement 4 aus. Im Fall der um 180° gedrehten Anordnung gemäß Fig. 3 und Fig. 4 befindet sich die Platine 8 relativ zur Unterschale 2 an derselben Stelle (das gleiche gilt für den Antennenkoppler 7) und ist daher die Kabelverbindung 9b länger ausgestaltet, um das Kontaktelement 4 an derselben Relativposition zu der Oberschale 3 zu erreichen und elektrisch zu verbinden.

Die Oberschale 3 weist an ihrer in Fig. 1 bis Fig. 4 oben dargestellten Oberseite eine Materialoberfläche 22 auf, die jedoch an dem links dargestellten Bereich der Oberschale 3 ausgespart ist. In diesem links dargestellten Endbereich der Oberschale 3 erhebt sich ein Fußteil 6, das, wie Fig. 2 und Fig. 4 zeigen, am Ende geschlossen ist.

Das Fußteil 6 kann z.B. in Längsrichtung der Halterung 1 unten liegen, wenn das zu haltende elektronische Gerät an seinem unteren Ende ein zu dem Kontaktelement 4 komplementäres Kontaktelement aufweist. Das Fußteil 6 kann jedoch auch oben liegen, wenn z.B. das zu haltende elektronische Gerät an seinem oberen Ende ein komplementäres Kontaktelement aufweist. Selbstverständlich ist es auch möglich, die Halterung 1 in anderer Lage, z.B. der in Fig. 1 bis Fig. 4 dargestellten horizontalen Lage, einzubauen.

An dem dem Fußteil 6 in Längsrichtung der Oberschale 3 gegenüberliegenden Ende ist die Befestigung eines Kopfteils 5 vorgesehen. Wie Fig. 2 und Fig. 11 zeigen, kann ein zusätzliches Einsatzteil 11 (zweiter mechanischer Adapter) in das Kopfteil 5 eingesetzt werden. Das Einsatzteil 11 ist auf die Abmessungen des zu haltenden elektronischen Geräts angepasst. Insbesondere weist es eine oder mehrere Aussparungen 23 auf, in die ein Ende des Geräts eingesetzt werden kann.

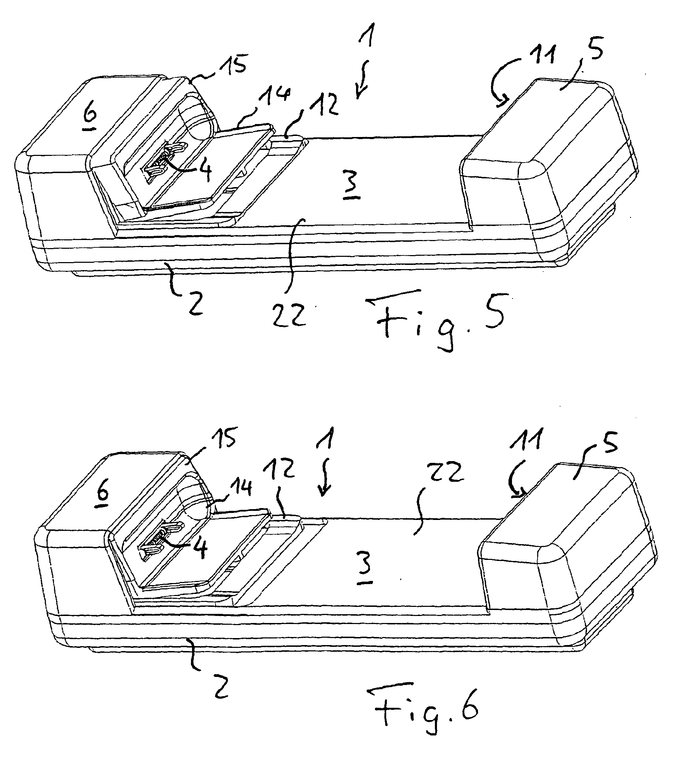

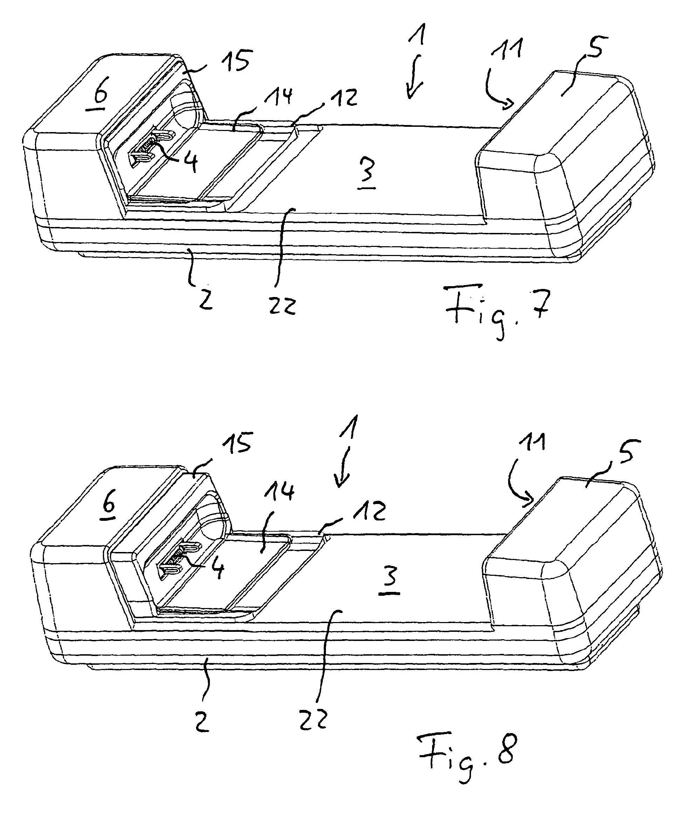

In die Aussparung der Oberfläche 22 der Oberschale 3 und den durch das Fußteil 6 gebildeten offenen Gehäuseraum werden ein erster mechanischer Adapter 14, 15 und ein Gleiter 12 eingesetzt. Der Gleiter 12 kann in Längsrichtung der Oberschale 3 und der Unterschale 2 an Gleitflächen der Oberschale 3 und/oder der Unterschale 2 entlang gleiten. Dabei wird er von den Federkräften zweiter Druckfedern 25a, 25b, die sich an der geschlossenen Stirnwand des Fußteils 6 innenseitig abstützen, in Richtung Fußteil 5 gedrängt. Die durch den Rand der Aussparung in der Oberfläche 22 gebildete Anschlagsposition ist in den Darstellungen von Fig. 5 und Fig. 8 erreicht.

Der Gleiter 12 weist wiederum an seiner in Fig. 1 bis Fig. 4 oben dargestellten Oberseite eine Aussparung 13 auf, in die der erste mechanische Adapter 14, 15 mit seinem unteren Teil 14 eingreifen kann. Dabei ist das näher an dem Ende des Fußteils 6 angeordnete Ende des Teils 14 dauerhaft in der Aussparung 13 angeordnet. Dagegen kann aufgrund der Drehbeweglichkeit des ersten mechanischen Adapters 14, 15 das andere Ende des Teils 14, welches näher an dem Kopfteil 5 liegt, je nach Drehstellung in der Aussparung 13 liegen (so genannte zweite Drehposition, in der ein Gerät in der Halterung 1 gehalten werden kann) oder kann wie in Fig. 5 und Fig. 6 gezeigt dieses Ende über die Ebene der Oberfläche 22 der Oberschale 3 bis in eine Dreh-Anschlagsposition hinausragen. In diese erste Drehstellung wird der erste mechanische Adapter 14, 15, der auch als Wippe bezeichnet werden kann, durch eine zweiflüglige Blattfeder 28 gedrängt.

Das zweite Teil 15 des ersten mechanischen Adapters 14, 15 weist an seiner in Fig. 1 bis Fig. 4 dargestellten Oberseite eine Aussparung für einen Stift 27 auf, der in dem Ausführungsbeispiel rotationssymmetrisch ist und dessen Rotationssymmetrieachse die Drehachse für die Drehbewegung des ersten mechanischen Adapters 14, 15 definiert. Zur Montage des ersten mechanischen Adapters 14, 15 werden zunächst die Teile 14, 15 in den durch den Gleiter 12 dafür vorgesehenen Raum eingesetzt, wobei außerdem das Kontaktelement 4 in die Aussparung 16 zwischen den beiden Teilen 14, 15 eingesetzt wird. Durch den in Fig. 1 bis Fig. 4 dargestellten Haltebügel 29 können die Teile 14, 15 nicht oder nur geringfügig nach oben ausweichen. Der Haltebügel 29 weist an seinen Seitenteilen jeweils eine Durchgangsöffnung auf, durch die der Stift 27 anschließend hindurchgesteckt wird, so dass er in die entsprechende Aussparung auch des zweiten Teils 15 eingeführt wird. Beim Betrieb der Halterung 1 stützen sich daher die Teile 14, 15 über den Stift 27 und die entsprechend geformten Aussparungen in den Seitenteilen des Bügels 29 an dem Gleiter 12 ab.

Wenn ein elektronisches Gerät mit anderen Außenabmessungen gehalten werden soll, werden alle Teile der Halterung 1, mit Ausnahme des Einsatzteils 11 und mit Ausnahme des ersten mechanischen Adapters 14, 15 sowie mit Ausnahme des Kontaktelements 4 in gleicher Weise hergestellt wie für den in Fig. 1 bis Fig. 4 dargestellten Fall. Das Kontaktelement 4 wird, soweit erforderlich, durch ein entsprechendes Kontaktelement ersetzt und mit dem Kabel 9a oder 9b verbunden, um das jeweilige zu haltende Gerät elektrisch kontaktieren zu können. Ferner wird zumindest die Form und/oder Größe des ersten mechanischen Adapters 14, 15 oder des an dem gegenüberliegenden Kopfteil 5 anzuordnenden zweiten mechanischen Adapters 11 an die Abmessungen des zu haltenden Geräts angepasst. Optional kann, soweit erforderlich, auch die Form und/oder Größe des Gleiters 12 angepasst werden.

Da diese Teile keine Außenoberflächen der Halterung 1 bilden, allenfalls mit Ausnahme des in Fig. 8 gezeigten Bereichs des ersten mechanischen Adapters 14, 15, müssen die Oberflächen der anzupassenden Teile geringere Anforderungen an ihre ästhetische Wirkung erfüllen und können somit zu geringeren Kosten hergestellt werden, als z.B. die Oberschale 2 und die Unterschalte 2, die in gleicher Weise für eine Vielzahl von Gerätetypen verwendbar sind.

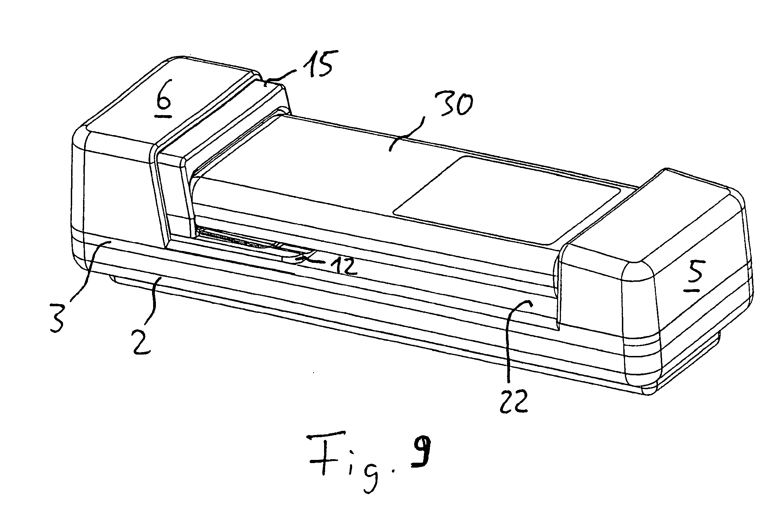

Das in Fig. 9 in der Halteposition gezeigte elektronische Gerät 30, z.B. ein Mobiltelefon, kann wie folgt in die Halterung 1 eingesetzt werden. Ausgehend von der in Fig. 5 dargestellten Stellung (Drehstellung und Linearposition in Längsrichtung der Halterung 1) des ersten mechanischen Adapters 14, 15 und des Gleiters 12 wird dasjenige Ende des Geräts 30 zunächst mit dem Kontaktelement 4 und dem ersten mechanischen Adapter 14, 15 in Kontakt gebracht, welches das zu dem Kontaktelement 4 komplementäre Kontaktelement aufweist. Dadurch wird bereits der elektrische Kontakt zwischen dem Gerät 30 und der Halterung, insbesondere den elektronischen Bauteilen 10, hergestellt.

Aus der in Fig. 5 gezeigten Linearposition drückt der Benutzer, indem er das Gerät 30 entsprechend bewegt, den Gleiter 12 samt erstem mechanischen Adapter 14, 15 in die in Fig. 6 dargestellte Relativposition zu der Oberschale 3. Dabei verändert sich die Drehstellung des ersten mechanischen Adapters 14, 15 relativ zu dem Gleiter 12 nicht. Alternativ kann jedoch bereits während der Linearbewegung (d.h. der translatorischen Bewegung in Längsrichtung der Halterung 1) eine Drehbewegung des ersten mechanischen Adapters 14, 15 relativ zu dem Gleiter 12 stattfinden. In der in Fig. 6 dargestellten Anschlagsposition für die Linearbewegung, in der die Druckfedern 25 die größte Kraft auf den Gleiter 12 ausüben, wäre daher eine andere Drehstellung erreicht als in Fig. 6 gezeigt, z.B. bereits die in Fig. 7 dargestellte Drehstellung, in der das Gerät 30 durch Linearbewegung in die entgegengesetzte Richtung in die Halteposition gebracht werden kann.

Wenn die Drehbewegung nicht gleichzeitig mit der Linearbewegung ausgeführt wird, wird anschließend die Drehbewegung von der ersten in die zweite Drehstellung ausgeführt, so dass der in Fig. 7 dargestellte Zustand erreicht ist. Wiederum alternativ kann die Drehbewegung in die zweite Drehposition noch nicht vollständig ausgeführt werden, wenn der elektrische und mechanische Kontakt zwischen dem Gerät 30 und dem mechanischen Adapter 14, 15 bereits vollständig hergestellt ist.

In allen Fällen wird jedoch nach der Herstellung dieses Kontakts eine lineare, translatorische Bewegung in die umgekehrte Richtung ausgeführt, die von den Druckfedern 25 unterstützt wird oder allein von diesen Druckfedern bewirkt wird. Diese Linearbewegung bewegt das Gerät 30 in Richtung des Kopfteils 5 auf das Einsatzteil 11 zu, bis das Gerät 30 mit dem Einsatzteil 11 in Kontakt ist. Dieser Zustand ist in Fig. 9 dargestellt, die die Halteposition zeigt.

## Patentansprüche

1. Halterung (1) für ein mobiles elektronisches Gerät (30) zur temporären Fixierung des Gerätes (30) an der Halterung (1), insbesondere zur temporären Fixierung des Gerätes (30) in einem Kraftfahrzeug, wobei
• die Halterung (1) eine Basis (2, 3) und mindestens ein elektrisches Kontaktelement (4) zur elektrischen Verbindung mit einem komplementären Kontaktelement an dem mobilen Gerät (30) aufweist, insbesondere um das Gerät (30) an eine Freisprecheinrichtung in dem Kraftfahrzeug anzuschließen,
• die Halterung einen ersten mechanischen Adapter (14, 15) aufweist, der eine erste Anlagefläche zum Anlegen eines ersten Oberflächenbereichs des Gerätes (30) aufweist und der das elektrische Kontaktelement als integralen Bestandteil aufweist oder fest mit dem Kontaktelement (4) verbunden ist,
• die Halterung zumindest einen zweiten mechanischen Adapter (11) aufweist, der eine zweite Anlagefläche zum Anlegen eines zweiten Oberflächenbereichs des Gerätes (30) aufweist, sodass das Gerät (30) zwischen der ersten und der zweiten Anlagefläche von der Halterung (1) fixierbar ist,
• der erste mechanische Adapter (14, 15) und das Kontaktelement (4) gemeinsam durch eine translatorische Bewegung und außerdem durch eine Drehung um eine Drehachse relativ zu der Basis (2, 3) der Halterung (1) beweglich sind,
• in einer ersten Drehposition des ersten mechanischen Adapters (14, 15) und des Kontaktelements (4) das Kontaktelement (4) mit dem komplementären Kontaktelement des Gerätes (30) in elektrischen Kontakt bringbar ist, sodass auch der erste Oberflächenbereich an der ersten Anlagefläche in Anlage gelangt,
• der erste mechanische Adapter (14, 15) und das Kontaktelement (4) in einer zweiten Drehposition durch eine translatorische Bewegung bewegbar sind, sodass auch der zweite Oberflächenbereich an der zweiten Anlagefläche in Anlage gelangt,
**dadurch gekennzeichnet, dass** der erste Adapter (14, 15) relativ zu einem translatorisch beweglichen Element (12) derart drehbeweglich ist, dass der erste Adapter (14, 15) und das Kontaktelement (4) in die erste und zweite Drehposition bewegbar sind, wobei das translatorisch bewegliche Element (12) relativ zu der Basis (2, 3) translatorisch bewegbar ist.

2. Halterung nach dem vorhergehenden Anspruch, wobei die Halterung eine elastisch verformbare Einrichtung (25) aufweist, die eine Spannkraft aufbringt, durch welche das Gerät (30) gegen ein unbeabsichtigtes Entfernen sichert, während es zwischen der ersten und der zweiten Anlagefläche der Halterung (1) fixiert ist, und wobei der erste mechanische Adapter (14, 15) und das Kontaktelement (4) in der zweiten Drehposition durch eine translatorische Bewegung gegen die Spannkraft bewegbar sind, um den zweiten Oberflächenbereich von der zweiten Anlagefläche zu entfernen.

3. Halterung nach einem der vorhergehenden Ansprüche, wobei der erste mechanische Adapter (14, 15) und/oder der zweite mechanische Adapter (11) gegen einen gleich wirkenden, jedoch mit einer anders geformten und/oder anders positionierten Anlagefläche versehenen Adapter austauschbar ist, um in der Halterung ein Gerät (30) mit anderen Außenabmessungen elektrisch anzuschließen und zu fixieren.

4. Halterung nach einem der vorhergehenden Ansprüche, wobei die Basis (2, 3) der Haltserung ein Grundelement (2) zur Befestigung der Halterung an einem anderen Gegenstand und ein Zwischenelement (3) aufweist, wobei das Zwischenelement (3) das Grundelement (2) mit den mechanischen Adaptern (11; 14, 15) verbindet und wobei das Zwischenelement (3) mit den daran angeordneten mechanischen Adaptern (11; 14, 15) in zwei verschiedenen Ausrichtungen relativ zu den Grundelement (2) anordenbar ist.

5. System mit einer Halterung nach Anspruch 3 zur wahlweise Fixierung von elektronischen Geräten (30) mit unterschiedlichen Außenabmessungen, wobei das System für alle Geräte (30) dieselbe Basis (2, 3), insbesondere einschließlich etwaiger elektrische und elektronischer Komponenten der Basis (2, 3), aufweist und wobei das System für jedes Gerät (30) mit unterschiedlichen Außenabmessungen jeweils einen zugeordneten Satz mechanischer Adapter (11; 14, 15) aufweist, die als erster mechanischer Adapter (14, 15) und als zweiter mechanischer Adapter (11) mit der Basis (2, 3) zu einer Halterung kombinierbar sind und die an die Außenabmessungen des Gerätes (30) angepasst sind.

6. Verfahren zum Herstellen einer Halterung (1) für ein mobiles elektronisches Gerät (30) zur temporären Fixierung des Gerätes (30) an der Halterung (1), insbesondere zur temporären Fixierung des Gerätes (30) in einem Kraftfahrzeug, wobei
• an einer Basis (2, 3) derart ein erster mechanischer Adapter (14, 15), der eine erste Anlagefläche zum Anlegen eines ersten Oberflächenbereichs des Gerätes (30) aufweist, und ein Kontaktelement (4), das einer elektrischen Verbindung mit einem komplementären Kontaktelement an dem mobilen Gerät (30) dient, angeordnet werden, dass der erste mechanische Adapter (14, 15) und das Kontaktelement (4) gemeinsam durch eine translatorische Bewegung und außerdem durch eine Drehung um eine Drehachse relativ zu der Basis (2, 3) der Halterung (1) beweglich sind,
• an der Basis (2, 3) zumindest ein zweiter mechanischer Adapter (11) angeordnet wird, der eine zweite Anlagefläche zum Anlegen eines zweiten Oberflächenbereichs des Gerätes (30) aufweist, sodass das Gerät (30) zwischen der ersten und der zweiten Anlagefläche von der Halterung (1) fixierbar ist,
sodass in einer ersten Drehposition des ersten mechanischen Adapters (14, 15) und des Kontaktelements (4) das Kontaktelement (4) mit dem komplementären Kontaktelement des Gerätes (30) in elektrischen Kontakt bringbar ist, um den ersten Oberflächenbereich an der ersten Anlagefläche in Anlage zu bringen, und sodass der erste mechanische Adapter (14, 15) und das Kontaktelement (4) in einer zweiten Drehposition durch eine translatorische Bewegung bewegbar sind, um auch den zweiten Oberflächenbereich an der zweiten Anlagefläche in Anlage bringen,
**dadurch gekennzeichnet, dass** der erste Adapter (14, 15) relativ zu einem translatorisch beweglichen Element (12) derart drehbeweglich angeordnet wird, dass der erste Adapter (14, 15) und das Kontaktelement (4) in die erste und zweite Drehposition bewegbar sind, wobei das translatorisch bewegliche Element (12) relativ zu der Basis (2, 3) translatorisch bewegbar angeordnet wird.

## Claims

1. Holder (1) for a mobile electronic appliance (30) for temporarily fixing the appliance (30) to the holder (1), in particular for temporarily fixing the appliance (30) in a motor vehicle, wherein
• the holder (1) has a base (2, 3) and at least one electrical contact element (4) for electrical connection to a complementary contact element on the mobile appliance (30), in particular in order to connect the appliance (30) to a hands-free device in the motor vehicle,
• the holder has a first mechanical adapter (14, 15) which has a first support face for supporting a first surface region of the appliance (30) and which comprises the electrical contact element as an integral constituent part or is firmly connected to the contact element (4),
• the holder has at least one second mechanical adapter (11) which has a second support face for supporting a second surface region of the appliance (30), so that the appliance (30) can be fixed between the first and the second support face by the holder (1),
• the first mechanical adapter (14, 15) and the contact element (4) together can move relative to the base (2, 3) of the holder (1) by virtue of a translatory movement and also by virtue of rotation about a rotation axis,
• the contact element (4) can be electrically contact-connected to the complementary contact element of the appliance (30) in a first rotation position of the first mechanical adapter (14, 15) and of the contact element (4), so that the first surface region also comes into contact with the first support face,
• the first mechanical adapter (14, 15) and the contact element (4) can be moved by a translatory movement in a second rotation position, so that the second surface region also comes into contact with the second support face,
**characterized in that** the first adapter (14, 15) can be moved in a rotary manner relative to an element (12), which moves in a translatory manner, in such a way that the first adapter (14, 15) and the contact element (4) can be moved to the first and second rotation position, wherein the element (12), which can move in a translatory manner, can be moved in a translatory manner relative to the base (2, 3).

2. Holder according to the preceding claim, wherein the holder has an elastically deformable device (25) which applies a clamping force by virtue of which the appliance (30) is prevented from being unintentionally removed while it is fixed between the first and the second support face of the holder (1), and wherein the first mechanical adapter (14, 15) and the contact element (4) can be moved against the clamping force by virtue of a translatory movement in the second rotation position in order to remove the second surface region from the second support face.

3. Holder according to either of the preceding claims, wherein the first mechanical adapter (14, 15) and/or the second mechanical adapter (11) can be replaced by an adapter which operates in the same way but is provided with a support face with a different shape and/or position, in order to electrically connect and to fix an appliance (30) with different external dimensions in the holder.

4. Holder according to one of the preceding claims, wherein the base (2, 3) of the holder has a base element (2) for mounting the holder on another object and an intermediate element (3), wherein the intermediate element (3) connects the base element (2) to the mechanical adapters (11; 14, 15), and wherein the intermediate element (3), together with the mechanical adapters (11; 14, 15) arranged on it, can be arranged with two different orientations relative to the base element (2).

5. System having a holder according to Claim 3 for selectively fixing electronic appliances (30) with different external dimensions, wherein the system has the same base (2, 3), in particular including any electric and electronic components of the base (2, 3), for all appliances (30), and wherein the system has a respective associated set of mechanical adapters (11; 14, 15) for each appliance (30) with different external dimensions, it being possible to combine the said adapters, as first mechanical adapters (14, 15) and as second mechanical adapters (11), with the base (2, 3) to form a holder, and said adapters being matched to the external dimensions of the appliance (30).

6. Method for producing a holder (1) for a mobile electronic appliance (30) for temporarily fixing the appliance (30) to the holder (1), in particular for temporarily fixing the appliance (30) in a motor vehicle, wherein
• a first mechanical adapter (14, 15), which has a first support face for supporting a first surface region of the appliance (30), and a contact element (4), which serves for electrical connection to a complementary contact element on the mobile appliance (30), are arranged on a base (2, 3) in such a way that the first mechanical adapter (14, 15) and the contact element (4) together can move relative to the base (2, 3) of the holder (1) by virtue of a translatory movement and also by virtue of rotation about a rotation axis,
• at least a second mechanical adapter (11) is arranged on the base (2, 3), the said second mechanical adapter having a second support face for supporting a second surface region of the appliance (30), so that the appliance (30) can be fixed between the first and the second support face by the holder (1),
so that the contact element (4) can be electrically contact-connected to the complementary contact element of the appliance (30) in a first rotation position of the first mechanical adapter (14, 15) and of the contact element (4) in order to bring the first surface region into contact with the first support face, and so that the first mechanical adapter (14, 15) and the contact element (4) can be moved by a translatory movement in a second rotation position, in order to also bring the second surface region into contact with the second support face,
**characterized in that** the first adapter (14, 15) can be moved in a rotary manner relative to an element (12), which moves in a translatory manner, in such a way that the first adapter (14, 15) and the contact element (4) can be moved to the first and second rotation position, wherein the element (12), which can move in a translatory manner, can be moved in a translatory manner relative to the base (2, 3).

## Revendications

1. Support (1) pour un appareil électronique mobile (30) pour une fixation temporaire de l'appareil (30) sur le support (1), en particulier pour une fixation temporaire de l'appareil (30) dans un véhicule automobile, dans lequel
- le support (1 ) présente une base (2, 3) et au moins un élément de contact électrique (4) pour la connexion électrique à un élément de contact complémentaire sur l'appareil mobile (30), en particulier pour connecter l'appareil (30) à un dispositif mains libres dans le véhicule automobile,
- le support présente un premier adaptateur mécanique (14, 15) qui présente une première surface d'application pour appliquer une première zone de surface de l'appareil (30) et qui présente l'élément de contact électrique sous la forme d'un composant solidaire de, ou relié solidement à l'élément de contact (4),
- le support présente au moins un deuxième adaptateur mécanique (11) qui présente une deuxième surface d'application pour appliquer une deuxième zone de surface de l'appareil (30) de sorte que l'appareil (30) peut se fixer entre la première et la deuxième surface d'application du support (1),
- le premier adaptateur mécanique (14, 15) et l'élément de contact (4) peuvent être déplacés ensemble par un mouvement de translation et en outre par une rotation autour d'un axe de rotation par rapport à la base (2, 3) du support (1),
- dans une première position de rotation du premier adaptateur mécanique (14, 15) et de l'élément de contact (4), l'élément de contact (4) peut être amené en contact électrique avec l'élément de contact complémentaire de l'appareil (30), de sorte que la première zone de surface aussi vienne s'appliquer contre la première surface d'application,
- le deuxième adaptateur mécanique (14, 15) et l'élément de contact (4) dans une deuxième position de rotation peuvent être déplacés par un mouvement de translation de sorte que la deuxième zone de surface aussi vienne s'appliquer contre la deuxième surface d'application,
**caractérisé en ce que** le premier adaptateur (14, 15) est mobile en rotation par rapport à un élément (12) mobile en translation, de telle sorte que le premier adaptateur (14, 15) et l'élément de contact (4) peuvent être déplacés dans la première et la deuxième position de rotation, l'élément (12) mobile en translation pouvant être déplacé en translation par rapport à la base (2, 3).

2. Support selon la revendication précédente, dans lequel le support présente un dispositif (25) à déformation élastique et exerçant une force de serrage par laquelle il protège l'appareil (30) contre un retrait involontaire pendant qu'il est fixé entre la première et la deuxième surface d'application du support (1), et dans lequel le premier adaptateur mécanique (14, 15) et l'élément de contact (4) peuvent être déplacés dans la deuxième position de rotation par un mouvement de translation contre la force de serrage afin de retirer la deuxième zone de surface de la deuxième surface d'application.

3. Support selon l'une quelconque des revendications précédentes, dans lequel le premier adaptateur mécanique (14, 15) et/ou le deuxième adaptateur mécanique (11) est/sont interchangeable(s) avec un adaptateur à effet identique mais avec une surface d'application de forme différente et/ou de position différente afin de connecter électriquement et de fixer dans le support un appareil (30) ayant des dimensions extérieures différentes.

4. Support selon l'une quelconque des revendications précédentes, dans lequel la base (2, 3) du support présente un élément de base (2) pour fixer le support sur un autre objet, et un élément intermédiaire (3), dans lequel l'élément intermédiaire (3) relie l'élément de base (2) aux adaptateurs mécaniques (11 ; 14, 15), et dans lequel l'élément intermédiaire (3) avec les adaptateurs mécaniques (11 ; 14, 15) disposés sur celui-ci peut être disposé dans deux orientations différentes par rapport à l'élément de base (2).

5. Système comprenant un support selon la revendication 3 pour la fixation sélective d'appareils électroniques (30) de diverses dimensions extérieures, dans lequel le système présente pour tous les appareils (30) la même base (2, 3), en particulier y compris les éventuels composants électriques et électroniques de la base (2, 3), et dans lequel le système présente pour chaque appareil (30) de diverses dimensions extérieures respectivement un jeu associé d'adaptateurs mécaniques (11 ; 14, 15) qui peuvent se combiner en tant que premier adaptateur mécanique (14, 15) et deuxième adaptateur mécanique (11) avec la base (2, 3) pour former un support et qui sont adaptés aux dimensions extérieures de l'appareil (30).

6. Procédé de fabrication d'un support (1) pour un appareil électronique mobile (30) pour une fixation temporaire de l'appareil (30) sur le support (1), en particulier pour une fixation temporaire de l'appareil (30) dans un véhicule automobile, dans lequel
- on agence sur une base (2, 3) un premier adaptateur mécanique (14, 15), qui présente une première surface d'application pour appliquer une première zone de surface de l'appareil (30), et un élément de contact (4) servant à une connexion électrique avec un élément de contact complémentaire sur l'appareil mobile (30) de telle sorte que le premier adaptateur mécanique (14, 15) et l'élément de contact (4) peuvent être déplacés ensemble par un mouvement de translation et en outre par une rotation autour d'un axe de rotation par rapport à la base (2, 3) du support (1),
- on agence sur la base (2, 3) au moins un deuxième adaptateur mécanique (11) qui présente une deuxième surface d'application pour appliquer une deuxième zone de surface de l'appareil (30) de telle sorte que l'appareil (30) peut se fixer entre la première et la deuxième surface d'application du support (1),
de sorte que dans une première position de rotation du premier adaptateur mécanique (14, 15) et de l'élément de contact (4), l'élément de contact (4) puisse être amené en contact électrique avec l'élément de contact complémentaire de l'appareil (30) afin d'appliquer la première zone de surface contre la première surface d'application, et de sorte que le premier adaptateur mécanique (14, 15) et l'élément de contact (4) puissent être déplacés dans une deuxième position de rotation par un mouvement de translation afin d'appliquer également la deuxième zone de surface contre la deuxième surface d'application,
**caractérisé en ce que** le premier adaptateur (14, 15) est disposé en étant mobile en rotation par rapport à un élément (12) mobile en translation, de telle sorte que le premier adaptateur (14, 15) et l'élément de contact (4) peuvent être déplacés dans la première et la deuxième position de rotation, l'élément (12) mobile en translation étant disposé de façon mobile en translation par rapport à la base (2, 3).
